# EUROPEAN PATENT SPECIFICATION

(11) **EP 3 485 994 B1**
(45) Date of publication and mention of the grant of the patent: **27.07.2022**
(21) Application number: 17202922.5
(22) Date of filing: 21.11.2017
(51) Int. Cl.: B21D 22/20

(54) **METHOD OF FORMING A METAL CONTAINER**
VERFAHREN ZUR HERSTELLUNG EINES METALLBEHÄLTERS
PROCÉDÉ DE FORMATION D'UN RÉCIPIENT MÉTALLIQUE

(43) Date of publication of application: 22.05.2019
(73) Proprietor: H & T Marsberg GmbH & Co. KG, 34431 Marsberg (Bredelar) (DE)
(72) Inventor: Schröder, Gerd, 34431 Marsberg (DE); Seefeldt, Volker, 34431 Marsberg (DE); Seiler, Matthias, 40627 Düsseldorf (DE)
(74) Representative: Uexküll & Stolberg

(56) References cited:
- EP-A1- 2 693 512
- US-A- 4 485 663
- US-A- 6 098 829
- US-A1- 2006 159 989

## Description

### FIELD OF THE INVENTION

The present invention relates to a method of forming a metal container useful as a battery shell by deep drawing. Deep drawing is effected under use of at least one punch having projecting forming surfaces and of means stretching the sheet material across the punch while the latter is moved traversly to the material, in particular at least one die which receives the formed material. Such deep drawn metal containers could find application as battery shells.

### BACKGROUND OF THE INVENTION

Battery shells can be deep drawn from metal cups, which are formed from metal sheets, often also referred-to as metal blanks. As defined in industry norm DIN 8584, the deep drawing process is a forming process which occurs under a combination of tensile and compressive conditions.

A typical deep drawing process is e.g. described in US Patent 2 989 019.

From D1 there is known a method of forming a metal container useful as a battery shell, the method comprising the steps of:providing a metal blank in the form of a disk, wherein the metal blank comprises a nickel-plated metal substrate having an upper side and an lower side, then transferring said metal blank to a first forming station which comprises a punch and a die, wherein the metal blank is formed into a cup having a sidewall and a closed base; then providing the metal cup to a set of forming stations, comprising at least one set of punches and dies, wherein said metal cup is deep drawn into a container having a sidewall and a closed base with an inner and an outer surface by the action of said at least one set of punches and dies; wherein the first forming station as well as the set of forming stations are located in one single multiple station deep drawing transfer press.

During the deep drawing the material undergoes high stress loads. Characteristic of deep drawing is the high pressure on the order of 6,89 × 10⁸ Pa(100.000 pounds per square inch (psi)) involved in the operation. To deal with such force and to avoid deformation of the punches and dies, a lubricant is used and the choice of lubricant is critical to the success of the operation. Under such pressure, the drawing lubricant should cool the die and the article, provide boundary lubrication between the die and the article, prevent metal-to-metal adhesion or welding and cushion the die during the drawing operation.

However, the lubricant used during the deep drawing operation has to be removed from the battery shell after drawing because any lubricant left behind can interfere with subsequent steps in the manufacturing of the part. Conventionally, the lubricant is removed in an additional step in the manufacturing method with the use of solvents such as an organic solvent or an alkaline cleaner, depending on the lubricant.

It would therefore be desirable to manufacture battery shells without the need of adding and removing a lubricant, while still achieving the required cooling and boundary lubrication between the die and the article.

In the field of conventional tin cans for the preservation of food or aerosol cans for sprays of conventional dimensions, sheet metals are known which comprise a nickel-clad metal substrate coated on both sides with multiple polymer layers. The polymer of at least one layer is a polyester. These sheet metals allow the production of tin cans or aerosol cans by deep drawing without an additional washing step. A volatile lubricant is used for drawing the sheet metal to a cup which does not affect subsequent manufacturing steps. Such sheet metal is for example commercially available under the trade name Protact from Tata Steel (Mumbai, India). A similar material is also commercially available from Toyo Kohan (Tokyo, Japan).

The manufacturing process of such tin and aerosol cans includes the lubrication of the polymer coated nickel-clad metal substrate which is subsequently provided to a first forming station. The first station stamps disk-shaped metal blanks out of the polymer coated substrate and forms those metal blanks into cups under use of a punch and a die. Subsequently the cups are provided to a set of forming stations such as a body maker which under use of a single punch and multiple concentric dies draws the cup into a can having sidewalls and a closed base. Additional forming steps may follow. For example the can may be provided with a flange.

It is an object of the present invention to further improve the known methods of forming a metal container useful as a battery shell with regard to costs and to provide a cost effective metal container.

### SUMMARY OF THE INVENTION

This object is achieved by a method of forming a metal container comprising the steps of claim 1. Preferred embodiments are set out in the dependent claims.

In connection with the present invention it has surprisingly been found that the polymer coated nickel-clad metal substrate as described above which has heretofore only be used for the production of tin- and aerosol-cans may also be used for the production of metal containers such as battery shells. However, due to geometric differences and differences in material of the battery shells compared to tin and aerosol cans deep drawing parameters have to be adapted. Battery shells differ from tin- or aerosol-cans in their size and wall thickness. Battery shells have smaller dimension and therefore smaller radiuses which have to be deep drawn avoiding the detachment of the coating from the metal substrate. Wall thicknesses of battery shells are in general smaller compared to those of tin- and aerosol cans. Yet, battery shells have to withstand high pressure loads in the range of 50 to 120 bar which can occur in case of a short-circuit of a battery. Moreover, for reasons regarding corrosion and improved electrical connectivity battery shells normally comprise a nickel or a nickel/cobalt coating. In connection with the present invention it has surprisingly been found that the polymer coated nickel-clad metal substrate provides sufficient corrosion resistance as well as sufficient electrical connectivity.

According to the present invention the first forming station in which the metal blank is formed into a cup as well as the set of forming stations in which the cup is drawn into a metal container are located in one single multiple station deep drawing transfer press. The set of forming stations comprises 5 to 15 sets of punches and dies, wherein the drawing ratio of each set of punches and dies is 1,1 to 2, preferably 1,2 to 1,5. The set of forming stations also includes thinning and forming stations.

Multiple station deep drawing transfer presses allow the integration of multiple deep drawing forming operations in one single press. In particular, the stamping of a metal blank out of the polymer coated nickel-clad metal substrate, its drawing into a cup and the drawing into a metal container are performed within the same multiple station deep drawing transfer press. This reduces costs and decreases production time of the metal containers.

In connection with the present invention it has been found that the production parameters of the multiple station deep drawing press which have to be adapted to the polymer coated nickel-clad metal substrate include amongst others the number of punches and dies used to draw the cup into the metal container as well as the drawing ratio. It has been found that these two parameters heavily affect the quality of the deep drawn article. In particular it has been found that a selection of these parameters in the above mentioned ranges (5 to 15 sets of punches and dies and a drawing ratio of each set of punches and dies of 1,1 to 2, preferably of 1,2 to 1,5 leads to a desirable quality of the deep drawn battery shells.

In an embodiment of the present invention the drawing velocity in step (c) is 1 to 4 m/s, preferably 2 to 3 m/s. In step (c) the metal cup is provided to a set of forming stations, comprising at least one set of punches and dies, wherein said metal cup is deep drawn into a container having a sidewall and a closed base with an inner and an outer surface by the action of said at least one set of punches and dies. It has been found that the polymer coating is sufficiently durable for up to 15 drawing steps and can sustain a total degree of deformation of up to 3.5. Additionally, the method prevents the creation of abrasion, which would obstruct the forming process.

In another embodiment according to the present invention the temperature of the cup or container is during step c) above 0°C and below the decomposition temperature of the at least one layer which has a molar mass of at least 20.000 g/mol and a polydispersity (M_{w}/Mₙ) of at least 1,1. The decomposition temperature of the at least one layer is preferably determined via the known method of thermal gravimetric analysis (TGA).

In a preferred embodiment of the present invention the cup has the form of a hollow cylinder. The cup has a sidewall and a closed base. The cup may be a purchased part. However, as explained above with regard to the metal blank it is intended to form the cup of the metal blank using the same deep drawing transfer press by means of which all other deep drawing operations according to the present invention are performed.

According to a preferred embodiment the metal container is cylindrical and has a diameter from 7 to 35 mm and a height from 35 to 75 mm. These dimensions correspond to those of cylindrical battery shells used for cylindrical batteries. Preferably, the metal container is configured to receive battery components such as an anode and a cathode. The term cylindrical is not meant to be restricted to a circular cylinder, although this form might be a preferred one. The term cylindrical may also include cylinders having a polygonal or elliptical base. Preferably the battery shells are used for the production of AA, AAA or other types of batteries.

Also preferred is an embodiment according to which the metal container has a height up to 170 mm a width up to 40 mm and a length up to 200 mm. These dimensions relate to cuboid battery shells which are used for cuboid batteries. However, these types of batteries show besides their cuboid form the same differences than cylindrical batteries as described above.

According to an embodiment of the present invention no lubricant is added during step (c). In connection with the present invention it has been found out that the polymer coated nickel-clad metal substrate does not require additional lubrication. Surprisingly, the polymer coating is sufficiently flexible to withstand the drawing process and adhere to the surface of the metal substrate. Moreover, the polymer coating reduces friction between the punch and the nickel-clad substrate and thus acts as a substitute for a lubricant. Optionally, the polymer of at least one layer has a molar mass of at least 20.000 g/mol and a polydispersity (M_{w}/Mₙ) of at least 1,1, preferably a molar mass of at least 30.000 g/mol and a polydispersity of at least 1,05. The polymer may optionally be chosen from the group of polyvinyl chloride- (PVC), or polyethylene- (PE), polypropylene- (PP) or polyester homo- or copolymers. The polymer may be metalized or it may include graphite and/or clay particles to improve lubrication. Preferably, all polymer layers of the polymer coated nickel-clad metal substrate comprise the above mentioned properties.

Preferably, the polymer is a polyethylene terephthalate (PET) or a polypropylene (PP). The polyethylene terephthalate may be an unmodified or modified PET such as with glycol or isophthalic acid. In order to improve adhesion of the polymer to the metal, an additional adhesive layer may be provided. Preferably, all polymer layers of the polymer coated nickel-clad metal substrate are formed from polyethylene terephthalate (PET) or a polypropylene (PP).

According to another embodiment of the present invention no lubricant comprising oil or grease is added before step (c). As no lubricant comprising oil or grease is used during the manufacturing process of the metal container the step of washing the drawn metal container can be dispensed. This leads to a save of energy of 30% compared to conventional deep drawing methods of metal container including a washing step.

According to a specific embodiment and, although not preferred, a volatile lubricant selected from the group consisting of stearates, stearamides and volatile, synthetic wax lubricants is added in step (b). In step (b) the metal blank is transferred to a first forming station which comprises a punch and a die, wherein the metal blank is formed into a cup having a sidewall and a closed base. A volatile lubricant may be used together with the polymer coated metal substrate. The volatile lubricant is preferably selected from the group consisting of stearates such zinc stearate or lithium stearate, stearamides such as stearamide, ethylene ester stearamide, ethylene bistearamide such acrawax C and volatile, synthetic wax lubricants. As the lubricant is volatile no additional washing step after deep drawing the metal container is necessary, which also lead to savings in overall energy consumption for the drawing process of at least 30% compared to conventional deep drawing methods of metal container including a washing step.

In another embodiment there are further forming steps applied to the container after step (c). For example a flange may be provided to the metal container opposite to the closed base.

Also disclosed herein is a metal container which is formable by a method as described above, wherein the metal container is formed as a battery shell. A battery shell fabricated according to the method described above leads to energy savings of 30% compared to conventional production methods. This is due to the omittance of a washing step during the production of the battery. Moreover, as the metal container is produced under use of a multiple station deep drawing transfer press the production costs of the battery can be decreased.

Also disclosed herein is the use of a metal container as described above as a battery shell. The battery shell may comprise a cylindrical or cuboid form and may have the dimensions as described above. The battery shell is adapted to receive battery components such as an anode and a cathode.

### BRIEF DESCRIPTION OF THE FIGURES

The invention will now be described in connection with one exemplary embodiment shown in the figures in which:
- Figure 1: shows a known polymer coated nickel-clad metal substrate,
- Figure 2: shows a metal cup according to the present invention,
- Figure 3: shows a first perspective view of a battery shell according to the present invention and
- Figure 4: shows a second perspective view of a battery shell according to Figure 3.

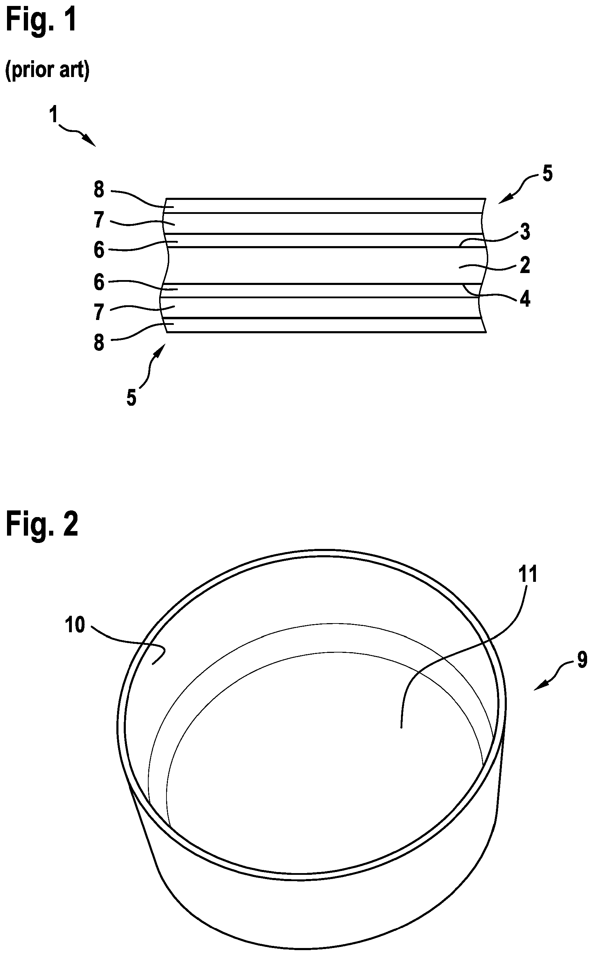

Figure 1 shows a sheet metal 1 which is known in the state of the art and which is used for forming a metal container according to the present invention.

The sheet metal 1 comprises a nickel-clad metal substrate 2 with an upper side 3 and a lower side 4. The upper side 3 as well as the lower side 4 are both coated with multiple polymer layers 5. The multiple layers 5 comprise an adhesion layer 6 which abuts the upper side 3 and the lower side 4 of the metal substrate 2, respectively. The layers 5 further comprise main layers 7 which abut the adhesion layers 6 on both sides 3, 4 of the metal substrate 2. Moreover, the layers 5 comprise surface layers 8 which abut the main layers 7 and form the outermost layers 5 of the sheet metal 1. The polymer of the main layer 7 is selected from the group of polyesters or polyolefins. In particular the polymer of the main layer 7 is a polyethylene terephthalate (PET) or a polypropylene (PP).

Figure 2 shows a metal cup 9 according to the present invention into which the polymer coated nickel-clad metal substrate 2 as described in combination with Figure 1 is drawn. The metal cup 9 has a sidewall 10 and a closed base 11. The metal cup 9 has the form of a hollow cylinder. The terms cylinder or cylindrical are not meant to be restricted to a circular cylinder, although this form might be a preferred one. The terms cylinder or cylindrical may also include cylinders having a polygonal or elliptical base.

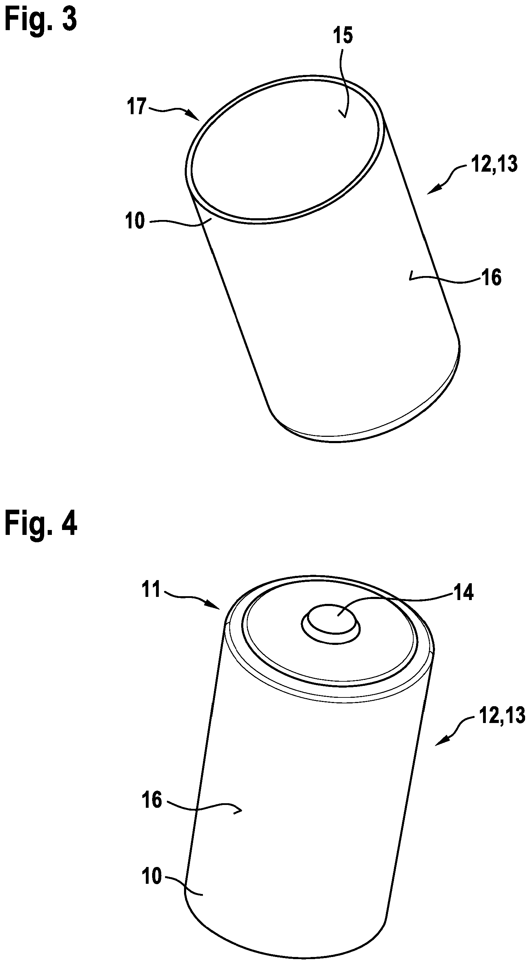

Figures 3 and 4 show a metal container 12 which is deep drawn from the metal cup 9 as shown in Figure 2. The metal container 12 is formed as a cylindrical battery shell 13 comprising a diameter from 7 to 35 mm and a height from 35 to 75 mm. The battery shell 13 has a sidewall 10 with a thickness between 0,15 mm and 0,4 mm. The battery shell 13 further has a closed base 11 with a terminal 14 for electrical connection. The battery shell 13 comprises an inner surface 15 and an outer surface 16. The battery shell 13 shows a homogenous polymer coating without any cracks.

In the following, a method of forming a metal container which is formed as a battery shell 13 shall be explained in connection with figures 1 to 4:
In step (a) a metal blank in the form of a disk (not shown) is provided. The metal blank comprises a metal substrate 2 having an upper side 3 and a lower side 4, each being coated with a plurality of polymer layers 5. The metal blank may be a purchased part. However, it is intended to fabricate the metal blank of the metal sheet 1 by die cutting using a multiple station deep drawing transfer press (not shown) by means of which all further deep drawing operations according to the present invention are performed.

Subsequently, according to step (b) the metal blank is transferred to a first forming station (not shown) which comprises a punch and a die, wherein the metal blank is formed into a cup 9 having a sidewall 10 and a closed base 11. Optionally, a volatile lubricant selected from the group consisting of stearates, stearamides and volatile, synthetic wax lubricant is added. The volatile lubricant may be added prior to or at the first forming station.

In a subsequent step (c) the metal cup 9 is provided to a set of forming stations (not shown) comprising at least one set of punches and die. The metal cup 9 is deep drawn into a metal container 12 formed as a battery shell 13 by the action of said at least one set of punches and dies. The battery shell 13 has a sidewall 10 and a closed base 11 with an inner surface 15 and an outer surface 16.

The first forming station as well as the set of forming stations are located in one single multiple station deep drawing transfer press. The set of forming stations comprises between 5 to 8 sets of punches and dies, wherein the drawing ratio of each set of punches and dies is 1,1 to 2,0, preferably 1,2 to 1,5.

The drawing velocity in step (c) is 1 to 4 m/s, preferably 2 to 3 m/s. In connection with the present invention the term drawing velocity is understood as the velocity of the punch traveling with respect to the die in order to form the metal sheet or the metal cup. The temperature of the cup 15 during step (c) is above 0°C and below the decomposition temperature of the main layer 7 which is chosen from the group of polyesters or polyolefins.

During step (c) there is no lubricant added. Additionally, there is no lubricant added before step (c) which comprises oil or grease. However, as described above, a volatile lubricant may be added in step (b).

Having completed step (c) the container shows a homogenous polymer coating without any cracks.

After step (c) there are further forming steps applied to the battery shell 13. For example the battery shell 13 may be trimmed to a predefined length and a flange may be formed to an open end 17 of the battery shell 13 opposite the base 11.

Hereinafter the battery shell may be used for the production of a battery. This includes amongst others the insertion of battery components such as an anode and a cathode into the batter shell.

### Reference numerals

- 1: sheet metal
- 2: metal substrate
- 3: upper side
- 4: lower side
- 5: layers
- 6: adhesion layer
- 7: main layer
- 8: surface layer
- 9: metal cup
- 10: sidewall
- 11: base
- 12: metal container
- 13: battery shell
- 14: terminal
- 15: inner surface (battery shell)
- 16: outer surface (battery shell)
- 17: open end

## Claims

1. Method of forming a metal container useful as a battery shell, the method comprising the steps of:
(a) providing a metal blank in the form of a disk, wherein the metal blank comprises a nickel-clad metal substrate (2) having an upper side (3) and an lower side (4) each being coated with multiple polymer layers (5), wherein the polymer of at least one layer (5) has a molar mass of at least 20.000g/mol and a polydispersity (M_{w}/Mₙ) of at least 1,1;
(b) transferring said metal blank to a first forming station which comprises a punch and a die, wherein the metal blank is formed into a cup (9) having a sidewall (10) and a closed base (11);
(c) providing the metal cup (9) to a set of forming stations, comprising at least one set of punches and dies, wherein said metal cup (9) is deep drawn into a container (12) having a sidewall (10) and a closed base (11) with an inner and an outer surface (15, 16) by the action of said at least one set of punches and dies;
wherein the first forming station as well as the set of forming stations are located in one single multiple station deep drawing transfer press,
wherein the set of forming stations comprises five to fifteen sets of punches and dies and,
wherein the drawing ratio of each set of punches and dies is 1,1 to 2,0, preferably 1,2 to 1,5.

2. Method according to claim 1 **characterized in that** the polymer of the at least one layer (5) has a molar mass of at least 30.000 g/mol and a polydispersity (M_{w}/Mₙ) of at least 1,05.

3. Method according to any of the preceding claims, **characterized in that** the polymer of the at least one layer (5) is chosen from the group of polyesters or polyolefins.

4. Method according to any of the preceding claims, **characterized in that** the drawing velocity in step (c) is 1 to 4 m/s, preferably 2 to 3 m/s.

5. Method according to any of the preceding claims, **characterized in that** during step (c) the temperature of the cup (9) or container (12) is above 0°C and below the decomposition temperature of the at least one layer (5) .

6. Method according to any of the preceding claims, **characterized in that** the cup (9) has the form of a hollow cylinder.

7. Method according to any of the preceding claims, **characterized in that** the metal container (12) is cylindrical and has a diameter of 7 mm to 35 mm and a height of 35 mm to 75 mm.

8. Method according to any of the preceding claims, **characterized in that** the metal container (12) has a height of up to 170 mm a width of up to 40 mm and a length of up to 200 mm.

9. Method according to any of the preceding claims, **characterized in that** no lubricant is added during step (c).

10. Method according to any of the preceding claims, **characterized in that** no lubricant comprising oil or grease is added before step (c).

11. Method according to any of the preceding claims, **characterized in that** in step (b) a volatile lubricant selected form the group consisting of stearates, stearamides and volatile, synthetic wax lubricants is added.

12. Method according to any of the preceding claims, **characterized in that** after step (c) there are further forming steps applied to the container (12).

## Patentansprüche

1. Verfahren zur Herstellung eines als Batteriegehäuse verwendbaren Metallbehälters, das die folgenden Schritte umfasst:
(a) Bereitstellen eines Metallrohlings in Form einer Scheibe, wobei der Metallrohling ein nickelplattiertes Metallsubstrat (2) mit einer Oberseite (3) und einer Unterseite (4) umfasst, die jeweils mit mehreren Polymerschichten (5) beschichtet sind, wobei das Polymer mindestens einer Schicht (5) eine Molmasse von mindestens 20.000 g/mol und eine Polydispersität (Mw/Mn) von mindestens 1,1 aufweist;
(b) Überführen des Metallrohlings in eine ersten Formstation, die einen Stempel und eine Matrize umfasst, in der der Metallrohling zu einem Becher (9) mit einer Seitenwand (10) und einem geschlossenen Boden (11) geformt wird;
(c) Überführen des Metallbechers (9) in einen Satz von Formstationen, die mindestens einen Satz von Stempeln und Matrizen umfassen, wobei der Metallbecher (9) durch die Wirkung des mindestens einen Satzes von Stempeln und Matrizen zu einem Behälter (12) tiefgezogen wird, der eine Seitenwand (10) und eine geschlossenen Basis (11) mit einer inneren und einer äußeren Oberfläche (15, 16) aufweist;
wobei die erste Umformstation sowie der Satz von Umformstationen in einer einzigen Mehrstationen-Tiefzieh-Transferpresse angeordnet ist,
wobei der Satz von Umformstationen fünf bis fünfzehn Sätze von Stempeln und Matrizen umfasst, und
wobei das Ziehverhältnis jedes Satzes von Stempeln und Matrizen 1,1 bis 2,0, vorzugsweise 1,2 bis 1,5 beträgt.

2. Verfahren nach Anspruch 1, **dadurch gekennzeichnet, dass** das Polymer der mindestens einen Schicht (5) eine molare Masse von mindestens 30.000 g/mol und eine Polydispersität (Mw/Mn) von mindestens 1,05 aufweist.

3. Verfahren nach einem der vorhergehenden Ansprüche, **dadurch gekennzeichnet, dass** das Polymer der mindestens einen Schicht (5) aus der Gruppe der Polyester oder Polyolefine ausgewählt ist.

4. Verfahren nach einem der vorhergehenden Ansprüche, **dadurch gekennzeichnet, dass** die Ziehgeschwindigkeit in Schritt (c) 1 bis 4 m/s, vorzugsweise 2 bis 3 m/s, beträgt.

5. Verfahren nach einem der vorhergehenden Ansprüche, **dadurch gekennzeichnet, dass** während des Schritts (c) die Temperatur des Bechers (9) oder Behälters (12) über 0°C und unter der Zersetzungstemperatur der mindestens einen Schicht (5) liegt.

6. Verfahren nach einem der vorhergehenden Ansprüche, **dadurch gekennzeichnet, dass** der Becher (9) die Form eines Hohlzylinders hat.

7. Verfahren nach einem der vorhergehenden Ansprüche, **dadurch gekennzeichnet, dass** der Metallbehälter (12) zylindrisch ist und einen Durchmesser von 7 mm bis 35 mm und eine Höhe von 35 mm bis 75 mm aufweist.

8. Verfahren nach einem der vorhergehenden Ansprüche, **dadurch gekennzeichnet, dass** der Metallbehälter (12) eine Höhe von bis zu 170 mm, eine Breite von bis zu 40 mm und eine Länge von bis zu 200 mm aufweist.

9. Verfahren nach einem der vorhergehenden Ansprüche, **dadurch gekennzeichnet, dass** in Schritt (c) kein Schmiermittel zugegeben wird.

10. Verfahren nach einem der vorhergehenden Ansprüche, **dadurch gekennzeichnet, dass** vor Schritt (c) kein öl- oder fetthaltiges Schmiermittel zugegeben wird.

11. Verfahren nach einem der vorhergehenden Ansprüche, **dadurch gekennzeichnet, dass** in Schritt (b) ein flüchtiges Schmiermittel, ausgewählt aus der Gruppe bestehend aus Stearaten, Stearamiden und flüchtigen, synthetischen Wachsschmiermitteln zugegeben wird.

12. Verfahren nach einem der vorhergehenden Ansprüche, **dadurch gekennzeichnet, dass** nach Schritt (c) weitere Formgebungsschritte an dem Behälter (12) vorgenommen werden.

## Revendications

1. Procédé de formation d'un récipient métallique pouvant être utilisé comme coque de batterie, le procédé comprenant les étapes suivantes :
(a) fournir une ébauche métallique sous la forme d'un disque, dans lequel l'ébauche métallique comprend un substrat en métal revêtu de nickel (2) ayant un côté supérieur (3) et un côté inférieur (4) tous deux couverts de plusieurs couches de polymère (5), dans lequel le polymère d'au moins une couche (5) a une masse molaire d'au moins 20 000 g/mol et une polydispersité (M_{w}/Mₙ) d'au moins 1,1 ;
(b) transférer ladite ébauche métallique dans un premier poste d'emboutissage qui comprend un poinçon et une matrice, dans lequel l'ébauche métallique prend la forme d'une coupe (9) ayant une paroi latérale (10) et une base fermée (11) ;
(c) fournir la coupe métallique (9) à un ensemble de postes d'emboutissage, comprenant au moins un ensemble de poinçons et de matrices, dans lequel ladite coupe métallique (9) subit un emboutissage profond pour donner un récipient (12) ayant une paroi latérale (10) et une base fermée (11) avec une surface intérieure et une surface extérieure (15, 16) par l'action dudit au moins un ensemble de poinçons et de matrices ;
dans lequel le premier poste d'emboutissage ainsi que l'ensemble de postes d'emboutissage se situent dans une seule pressetransfert d'emboutissage profond à postes multiples,
dans lequel l'ensemble de postes d'emboutissage comprend de cinq à quinze ensembles de poinçons et de matrices,
et dans lequel le rapport d'emboutissage de chaque ensemble de poinçons et de matrices vaut de 1,1 à 2,0, de préférence de 1,2 à 1,5.

2. Procédé selon la revendication 1, **caractérisé en ce que** le polymère de ladite au moins une couche (5) a une masse molaire d'au moins 30 000 g/mol et une polydispersité (M_{w}/Mₙ) d'au moins 1,05.

3. Procédé selon l'une quelconque des revendications précédentes, **caractérisé en ce que** le polymère de ladite au moins une couche (5) est choisi dans le groupe des polyesters ou des polyoléfines.

4. Procédé selon l'une quelconque des revendications précédentes, **caractérisé en ce que** la vitesse d'emboutissage à l'étape (c) est de 1 à 4 m/s, de préférence de 2 à 3 m/s.

5. Procédé selon l'une quelconque des revendications précédentes, **caractérisé en ce que** pendant l'étape (c), la température de la coupe (9) ou du récipient (12) est supérieure à 0 °C et inférieure à la température de dégradation de ladite au moins une couche (5).

6. Procédé selon l'une quelconque des revendications précédentes, **caractérisé en ce que** la coupe (9) a la forme d'un cylindre creux.

7. Procédé selon l'une quelconque des revendications précédentes, **caractérisé en ce que** le récipient métallique (12) est cylindrique et a un diamètre de 7 mm à 35 mm et une hauteur de 35 mm à 75 mm.

8. Procédé selon l'une quelconque des revendications précédentes, **caractérisé en ce que** le récipient métallique (12) a une hauteur maximale de 170 mm, une largeur maximale de 40 mm et une longueur maximale de 200 mm.

9. Procédé selon l'une quelconque des revendications précédentes, **caractérisé en ce qu'**aucun lubrifiant n'est ajouté pendant l'étape (c).

10. Procédé selon l'une quelconque des revendications précédentes, **caractérisé en ce qu'**aucun lubrifiant comprenant de l'huile ou de la graisse n'est ajouté avant l'étape (c).

11. Procédé selon l'une quelconque des revendications précédentes, **caractérisé en ce que**, à l'étape (b), on ajoute un lubrifiant volatil choisi dans le groupe comprenant les stéarates, les stéaramides et les lubrifiants du type cire synthétique volatile.

12. Procédé selon l'une quelconque des revendications précédentes, **caractérisé en ce que**, après l'étape (c), on applique des étapes de formage supplémentaires au récipient (12).
